# EUROPEAN PATENT APPLICATION

(11) **EP 4 420 839 A1**
(43) Date of publication of application: **28.08.2024**
(21) Application number: 22883654.0
(22) Date of filing: 21.10.2022
(51) Int. Cl.: B25J 9/22

(54) **ROBOT DATA PROCESSING SERVER, AND PATH DATA CALCULATING METHOD**

(30) Priority: 22.10.2021 JP 2021172877
(71) Applicant: KAWASAKI JUKOGYO KABUSHIKI KAISHA, Kobe-shi, Hyogo 650-8670 (JP)
(72) Inventor: HONDA, Fumihiro, Kobe-shi, Hyogo 6508670 (JP); SHIMIZU, Shoji, Kobe-shi, Hyogo 6508670 (JP); TANIGUCHI, Ryusuke, Kobe-shi, Hyogo 6508670 (JP); MIYAZAKI, Toshihiko, Kobe-shi, Hyogo 6508670 (JP)
(74) Representative: Müller-Boré & Partner Patentanwälte PartG mbB
(86) International application number: PCT/JP2022/039219
(87) International publication number: WO 2023/068351

(57) **Abstract**

A robot data processing server includes a storage device, a communication device, and a processing unit. The storage device stores operation result data including plural sets of data, each set of which includes an operation program for an industrial robot and operations of the robot responding to the operation program from one time to another. The communication device receives an operation verification program by communicating with a client device via a wide area network, the operation verification program being an operation program created in the client device. The processing unit creates trajectory data based on the operation verification program received by the communication device and the operation result data stored in the storage device, the trajectory data indicating operations of the robot for the operation verification program from one time to another.

## Description

### Technical Field

The present invention relates primarily to a robot data processing server for processing data on an industrial robot.

### Background Art

Patent Literature 1 (PTL 1) discloses a production system including more than one industrial machines that operate in accordance with an operation program. The operation of the production system is optimized by a cell controller. More specifically, the cell controller analyzes what has an adverse effect on a tact time of the production system based on time-series running information obtained from the production system, and improves the operation program. The information obtained by the cell controller is transmitted to a cloud server. This allows the information to be shared among two or more cell controllers. PTL 1 also mentions an industrial robot as an example of the industrial machine.

### Citation List

### Patent Literature

PTL 1: Japanese Patent Application Laid-Open No. 2017-199077

### Summary of Invention

### Technical Problem

An operation program for an industrial robot is data in which operations to be performed by the robot are described in a sequential order. In an actual control on the robot, however, an operation of the robot responding to the operation program at each time may differ due to a load imposed on the robot, for example. Hereinafter, operations of the robot at respective times will be referred to as trajectory data. In order that an interference with another object, a cycle time, and the like, can be verified in detail, it is necessary to create the trajectory data with a high accuracy based on the operation program. To create the trajectory data with a high accuracy based on the operation program, for example, result data are required, the result data relating to results indicating how the robot operates in response to the operation program. It however is difficult to prepare the result data at a single work location.

The present invention has been made in view of the circumstances described above, and aims primarily to provide a robot processing server that offers the trajectory data for the operation program with a high accuracy.

### Solution to Problem

The foregoing has described problems to be solved by the present invention. The following will describe solutions to the problems and advantageous effects thereof.

A first aspect of the present invention provides a robot data processing server configured as follows. The robot data processing server includes a storage device, a communication device, and a processing unit. The storage device stores operation result data including plural sets of data, each set of which includes an operation program for an industrial robot and operations of the robot responding to the operation program from one time to another. The communication device receives an operation verification program by communicating with an external device via a wide area network, the operation verification program being the operation program created in the external device. The processing unit creates trajectory data based on the operation verification program received by the communication device and the operation result data stored in the storage device, the trajectory data indicating operations of the robot for the operation verification program from one time to another.

A second aspect of the present invention provides a method for calculating trajectory data. An operation verification program is received by communication with an external device via a wide area network, the operation verification program being the operation program created in the external device. Trajectory data are created based on the received operation verification program and operation result data including plural sets of data, each set of which includes an operation program for an industrial robot and operations of the robot responding to the operation program from one time to another, the trajectory data indicating operations of the robot for the operation verification program from one time to another.

### Advantageous Effect of Invention

According to the present invention, a robot processing server that offers trajectory data for an operation program with a high accuracy can be provided.

### Brief Description of Drawings

[FIG. 1] An outline drawing showing a robot service provider system
[FIG. 2] A block diagram showing a server, a client device, and a robot system
[FIG. 3] A flowchart of a trajectory creation service
[FIG. 4] A diagram for the explanation of creation and use of a trajectory creation model

### Description of Embodiments

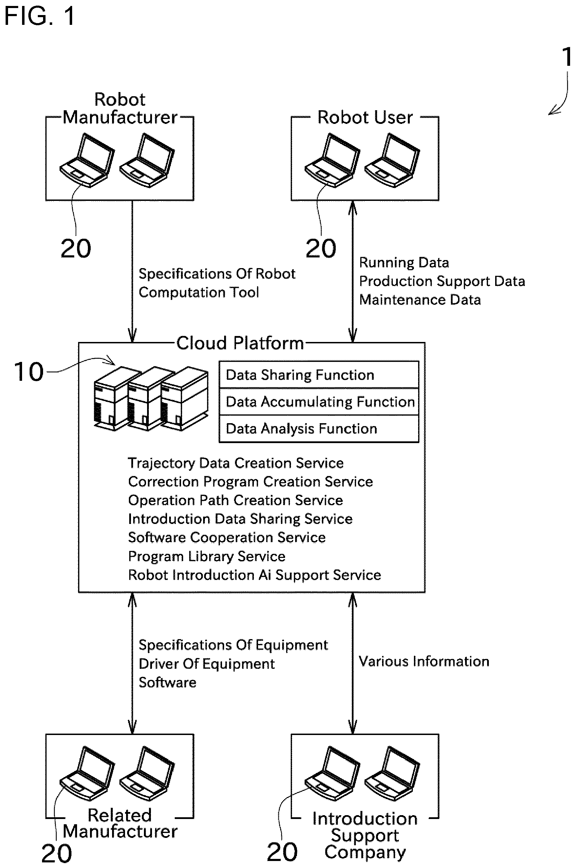

The following will describe, with reference to the drawings, an embodiment of the present invention. First, referring to FIG. 1, an outline of a robot service provider system 1 will be described.

The robot service provider system 1 is a system that aggregates information provided by companies involved in an industrial robot, and provides various services to the respective companies.

The industrial robot refers to a robot that works at a workshop in a factory, a warehouse, or the like. The industrial robot is of teaching playback type. The teaching playback type means: teaching in advance an operation of the industrial robot; and having the industrial robot repeat the same operation in accordance with what has been taught. The industrial robot is, for example, a vertical-articulated or horizontal-articulated arm robot. The robot service provider system 1 is applicable to a robot other than arm robots, such as a parallel link robot. Examples of works performed by the industrial robot include assembling, welding, coating, machining, or transporting. Hereinafter, the industrial robot will be simply referred to as "robot."

As shown in FIG. 1, the companies involved in the industrial robot include a robot manufacturer, a robot user, a related manufacturer, an introduction support company, and the like. The robot manufacturer develops, manufactures, and maintains the robot. The robot user introduces the robot to its own workshop, and makes the robot work. The related manufacturer is, for example, a manufacturer for manufacturing peripheral equipment such as a work tool or a sensor. The related manufacturer may encompass a manufacturer that provides software for teaching or managing the robot, for example. The introduction support company, which is a so-called system integrator, supports the robot user in introducing the robot. To be specific, the introduction support company selects a robot suitable for the workshop of the robot user, teaches the robot, or suggests a change for the better after the introduction, for example.

As shown in FIG. 1, the robot service provider system 1 includes a server 10 and client devices 20.

The server 10 and the client devices 20 are at different locations. The server 10 and the client devices 20 are mutually communicable via a wide area network. The wide area network is the Internet for example, but may be something other than the Internet. Examples of the something other than the Internet include a network in which local area networks at different locations are connected by a dedicated line.

The server 10 is a robot data processing server, which aggregates information relating to the robot, and provides later-described services to the respective companies. The server 10 is installed in a data center, for example. The server 10 may be a single piece of hardware, or may be composed of two or more pieces of hardware in cooperation with each other. For example, a piece of hardware that aggregates and stores information may be separate from a piece of hardware that executes a process in accordance with a request from the client device 20. The server 10 may be implemented by a cloud computing service.

The client devices 20 are installed in the robot manufacturer, the robot user, the related manufacturer, and the introduction support company, respectively. The client devices 20 are general-purpose PCs, on which software for using the robot service provider system 1 is installed. This software will hereinafter be called a "robot running support application." The client devices 20 do not always have to be general-purpose PCs, but may be dedicated products exclusively for use of the robot service provider system 1. The client devices 20 do not always have to be PCs, but may be tablet devices or smartphones. The client devices 20 may be installed with software different from the robot running support application, which more specifically is teaching software provided by the related manufacturer.

In the following, descriptions will be given in a simplified fashion: for example, the client device 20 provided in the robot manufacturer transmitting data to the server 10 is expressed as the robot manufacturer transmitting data to the server 10.

Information transmitted and received in the robot service provider system 1 will now be described. The information illustrated below is just an example, and information other than the below-described one may be transmitted and received.

The robot manufacturer transmits to the server 10 a computation tool and specifications of the robot that the robot manufacturer manufactures, for example. The specifications of the robot include the size of the robot, a movable range of an arm, a speed range of the arm, and the like. The specifications of the robot are transmitted in association with a model type of the robot. The computation tool is, for example, software that makes the robot operate in accordance with an operation program, or software for teaching the robot.

The robot user transmits to the server 10 data accumulated through running of the robot. The data include, for example, the operation of the robot in accordance with the operation program, a cycle time, or a location where a failure occurs. The robot user is capable of receiving production support data from the server 10. The production support data are data that are used when the robot is introduced or operated, and the production support data are data relating to the peripheral equipment or the work tool, or are a program necessary to introduce the robot or to add a work, for example.

The related manufacturer transmits to the server 10 specifications of the peripheral equipment of the robot, a driver of the peripheral equipment, a program for linking the peripheral equipment to the robot, or software. The related manufacturer, when the driver or the software is updated, transmits an update file to the server 10.

The introduction support company receives various data that the server 10 has received from other companies. The introduction support company can make use of these data when supporting the robot user in introducing the robot.

Services provided by the robot service provider system 1 will be briefly described below.

The server 10 provides a virtual place serving as a cloud platform, to facilitate collaboration of companies. The server 10 has a data sharing function, a data accumulating function, and a data analysis function. The data sharing function is a function that allows data received by the respective companies to be shared among the companies. The data accumulating function is a function for accumulating data received from the respective companies. The data analysis function is a function for analyzing data accumulated by the data accumulating function, and creating new information. The analysis of data is preferably carried out by using an AI, for example. The robot service provider system 1 provides services through these functions.

Services that the robot service provider system 1 provides in an introduction of the robot include a trajectory data creation service, a correction program creation service, an operation path creation service, an introduction data sharing service, a software cooperation service, a program library service, and a robot introduction AI support service. Each company receives these services through the robot running support application installed on its client device 20.

The trajectory data creation service is a service of the server 10 creating trajectory data. First, the robot user or the introduction support company transmits an operation program to the server 10. The server 10 creates trajectory data for the received operation program, and transmits the trajectory data to the robot user or the introduction support company. The operation program is data in which operations to be performed by the robot are described in a sequential order. To be specific, the operation program includes a teaching point at which the robot is to be positioned, and the speed and acceleration of movement of the arm. In a case where an operation of the robot is triggered by an operation of another device, the operation program includes a condition related to an operation timing. The trajectory data are operations of the robot from one time to another. Use of data accumulated in the server 10 allows the trajectory data to be calculated with a high accuracy. Details of the trajectory data creation service will be given later.

The correction program creation service is a service of the server 10 creating a correction program. First, the robot user or the introduction support company transmits a teaching point and a work class to the server 10. The work class refers to a kind of the work performed by the robot, such as assembling or welding. In a case of the welding, it may be possible to further set a kind of the welding, a kind of a workpiece, or the like. The server 10 creates a correction program based on the teaching point and the work class received, and transmits the correction program to the robot user or the introduction support company. The correction program is a program used to correct an error of an actual work against at a time of teaching. Use of data accumulated in the server 10 makes it possible to propose an appropriate correction method to the robot user or the introduction support company.

The operation path creation service is a service of the server 10 creating an operation path. First, the robot user or the introduction support company creates interference data. The interference data are data in which plural teaching points are each associated with whether or not the robot interferes with another object when the position and posture of the robot are aligned to the teaching point. The robot user or the introduction support company transmits the interference data to the server 10. The server 10 creates an operation path based on the interference data. The operation path is data in which teaching points of the robot are sequenced in time series. Use of data accumulated in the server 10 allows creation of an appropriate operation path.

The introduction data sharing service is a service that facilitates sharing of introduction data among companies, the introduction data being used when the robot is introduced to the robot user. The introduction data include data on the workshop of the robot user, data on the workpiece, data on work details, data on the operation program, a control program for the peripheral equipment, or the like. The introduction data are saved in the server 10, and are accessed by the robot user or the introduction support company. Consequently, sharing of the introduction data is facilitated.

The software cooperation service is a service that enables pieces of software provided by various companies to cooperate together. The server 10 runs a piece of software provided by the robot manufacturer in cooperation with a piece of software provided by the related manufacturer. In this manner, the robot and the peripheral equipment can be linked easily. Linking a piece of teaching software provided by the robot manufacturer to a piece of teaching software provided by someone other than the robot manufacturer allows an effective use of the advantages of the two kinds of teaching software.

The program library service is a service that stores programs provided by various companies as a library so that they can be shared among the companies. For example, to create an operation program that needs use of a special work tool or an operation program that needs sensing, a force sense control, or the like, a skill is required. In this respect, by the program library service, an operation program that can be used for general purposes is stored as a library in the server 10. This enables the robot user or the introduction support company to easily create the above-mentioned kinds of operation programs.

The robot introduction AI support service is a service for supporting an introduction of the robot by using an AI when the robot user introduces the robot. As described above, when the robot user introduces the robot, the robot service provider system 1 provides various services to the robot user. The server 10 accumulates data obtained in providing the services, and analyzes the data. More specifically, the server 10 makes the data machine-learned. Accordingly, when a new robot user introduces the robot, a proposal can be made to the new robot user based on a tendency of the robot model type, the peripheral equipment, the operation program, or the like, adopted by previous robot users.

Functions that the robot service provider system 1 has in order to appropriately supply the foregoing services will now be briefly described.

Data shared in the server 10 include highly confidential data. For example, data on the workshop of the robot user and data on the workpiece can sometimes be highly confidential. Shared data may possibly include customer information and technology information of each company. This is why the robot service provider system 1 has a security function for preventing leakage of highly confidential data.

In some case, the robot running support application may be used to build a virtual environment including a workshop, a workpiece, a robot, and the like, for observation of an introduction of the robot or running of the robot. In this case, it is preferable that the virtual environment on the robot running support application is always kept coincident with an environment of an actual machine in the workshop. This is why the robot running support application has a function for enabling the virtual environment to be built or updated easily.

The robot service provider system 1 provides a wide variety of services. These services are provided through the robot running support application. The robot running support application, therefore, has a user interface that can facilitate performing functions desired by an operator.

The server 10 accumulates various data. If, for example, all of data about the introduction of the robot are transmitted to the server 10, not only the security problem mentioned above but also a problem of an enlarged communication data amount and an enlarged server capacity can arise. The robot service provider system 1, therefore, has a function for extracting only data related to providing of services and/or for reducing the size of data not related to providing of services, instead of transmitting all of the data about the introduction of the robot.

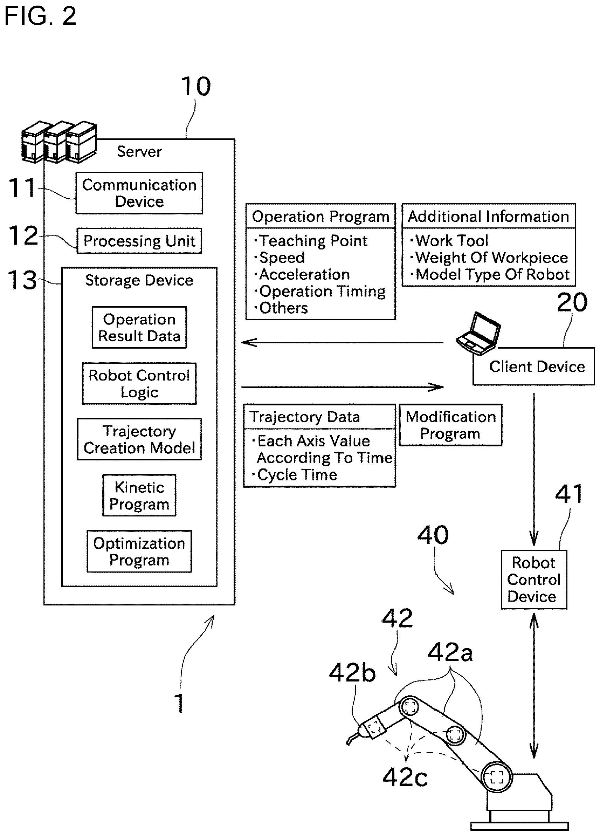

Configurations of the server 10, the client device 20, and a robot system 40 will now be described with reference to FIG. 2.

The server 10 includes a communication device 11, a processing unit 12, and a storage device 13. The communication device 11, which for example is a communication module, communicates with the client device 20, or the like, as an external device. The processing unit 12, which for example is a CPU, executes various processes by executing a program. The storage device 13, which is a hard disk or an SSD, stores various data including the foregoing program. The processes performed by the processing unit 12, and the data stored in the storage device 13 will be detailed later.

The client device 20 is provided in each of the companies, and is installed with the robot running support application, as described above. The client device 20, like the server 10, includes a communication device, a processing unit, and a storage device. The client device 20 further includes a display device and an input device. The display device, which is a liquid crystal display or an organic electroluminescent display, displays an image created by the processing unit. The input device, which is a mouse, a keyboard, a touch panel, or the like, receives a human operation.

The client device 20 transmits to the robot system 40 an operation program that the client device 20 has created or an operation program that the client device 20 has received from the server 10. The robot system 40 includes a robot control device 41 and a robot 42.

The robot control device 41 includes a processing unit such as a CPU, and a storage device such as a hard disk, an SSD, or a flash memory. The processing unit executes a program stored in the storage device, to control the robot 42.

The robot 42 includes plural arms 42a, a work tool 42b, and sensors 42c. The arms 42a are individually operated by power of an actuator such as a motor. The work tool 42b performs a work on a workpiece. The work tool 42b is, for example, a hand for holding the workpiece, or a welding torch for welding the workpiece. The sensors 42c detect the rotation angles of the respective arms 42a, and output detection results to the robot control device 41.

With the above-described configuration, the robot control device 41 controls the actuator based on the operation program and the rotation angles detected by the sensors 42c, to operate the arms 42a and/or to make the work tool 42b perform the work.

The trajectory data creation service will now be described in detail with reference to FIG. 2 to FIG. 4.

The trajectory data creation service is, as mentioned above, a service in which the server 10 creates trajectory data based on the operation program that the client device 20 has created, and transmits the trajectory data to the client device 20. When viewed from the server 10 side, the client device 20 corresponds to an external device.

A process of the client device 20 creating the operation program is a generally adopted process, and thus will be described briefly. The client device 20 arranges, in a virtual space, three-dimensional data on the workshop, three-dimensional data on the robot, and three-dimensional data on the workpiece. Then, the client device 20 creates a teaching point of the robot based on contents of the work that the robot performs on the workpiece. In a case of operating the robot in conjunction with the peripheral equipment, the client device 20 sets operation conditions such that a movement to the next teaching point is triggered by, for example, a signal received from the peripheral equipment. In this embodiment, the client device 20 creates the operation program not with teaching software provided by the robot manufacturer but with teaching software provided by the related manufacturer.

The method for creating the operation program is just an example, and a method different from the above may be adoptable. For example, the operation program may be created by a method in which, for teaching, the robot is moved not in a virtual space but in the actual workshop. For an interference check which will be described later, however, it is preferable that a virtual space is built to create the operation program.

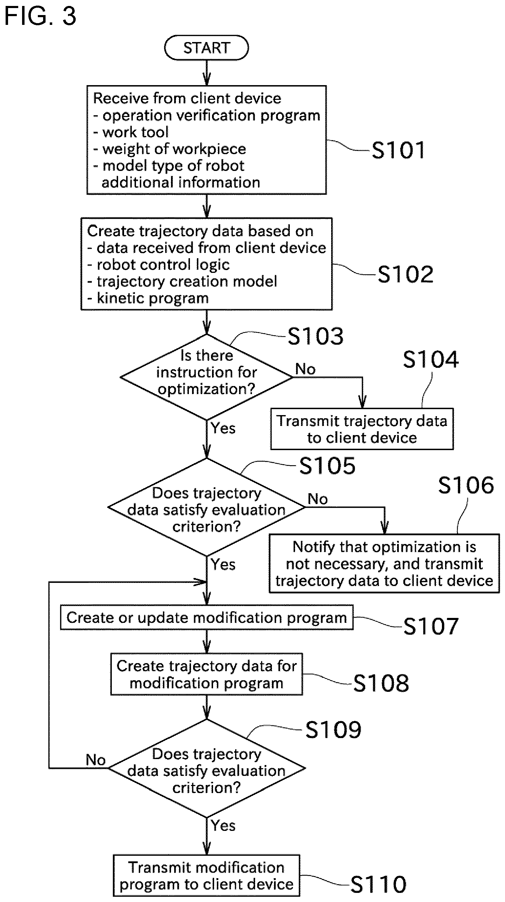

In the following, a specific process performed by the server 10 will be described according to a flowchart related to the server 10 shown in FIG. 3. In the following, the operation program created by the client device 20 will be called "operation verification program," for the distinction from the operation program accumulated by the server 10.

The server 10 receives an operation verification program and additional information from the client device 20 (S101). The operation verification program is text data that describe a program code. A format of the program code is fixed. Thus, contents of the program can be easily obtained even through software other than the teaching software with which the operation verification program has been created. The server 10 reads the operation verification program, and extracts information necessary to create trajectory data. More specifically, the server 10 extracts at least a teaching point from the operation verification program. The teaching point is data that are included in the operation verification program without a fail.

The server 10 further extracts a tool kind, a weight of the workpiece, and a robot model type from the operation verification program, if they are included in the operation verification program. Whether or not these pieces of information are included in the operation verification program depends on, for example, a configuration of the software with which the operation verification program has been created. If the server 10 cannot extract necessary information from the operation verification program, the server 10 requests the client device 20 to transmit the additional information. In other words, if the server 10 is able to extract all information necessary to create the trajectory data from the operation verification program, the server 10 does not request that the additional information be transmitted. The additional information is information that is necessary to create the trajectory data and that is not included in the operation verification program. For example, the client device 20 displays an input form on the display device, to let a worker input missing information as the additional information.

It may be possible that, after confirmation by the worker, the client device 20 searches the storage device for the additional information, and transmits the additional information to the server 10. If the teaching software of the client device 20 is customized so as to be compatible with the robot service provider system 1, the client device 20 may read all information required by the server 10 from the storage device, and transmit it to the server 10. It may also be possible that the client device 20 transmits a portion, not the entirety, of the operation verification program to the server 10. For example, the client device 20 may extract necessary information such as the teaching point from the operation verification program, and transmit it to the server 10. Herein, transmission of a portion of the operation verification program is regarded as transmission of the operation verification program.

The server 10 then creates trajectory data for the operation verification program (S102). The trajectory data are, as mentioned above, operations of the robot 42 from one time to another. In more detail, the trajectory data are the rotation angles of the respective arms 42a of the robot 42 at each time in every sampling period. A completion time of the last operation described in the trajectory data corresponds to a cycle time. That is, the trajectory data includes information relating to the cycle time. The trajectory data are created based on the operation verification program, the additional information, a robot control logic, a trajectory creation model, and a kinetic program. Each data will be detailed below.

The robot control logic is data provided from the robot manufacturer, and is stored in the storage device 13. The robot control logic includes details of a process for controlling the robot based on the operation program. More specifically, it is information showing a flow of a process in which the robot control device 41 operates the actuator of the robot 42. The robot control logic is associated with a robot model type. The server 10 applies a robot control logic according to a robot model type included in the operation verification program or in the additional information. Since the robot control logic is used to create the trajectory data, the trajectory data can be created with a high accuracy. In general, teaching software provided by someone other than the robot manufacturer does not include a robot control logic. Thus, a robot user who uses teaching software provided by someone other than the robot manufacturer, like in this embodiment, can create trajectory data with a higher accuracy if provided with the trajectory creation service. Here, use of the robot control logic is not indispensable, and for example, the trajectory data may be created based on a general logic such as a logic contained in teaching software provided by someone other than the robot manufacturer.

The weight of the work tool 42b differs depending on a kind of the work tool 42b of the robot 42. The kind of the work tool 42b affects the trajectory data, therefore. In a case where the workpiece is transported while being gripped, the weight of the workpiece affects the trajectory data. Thus, application of the robot control logic in further consideration of the weight of the work tool 42b and the weight of the workpiece makes it possible to calculate the trajectory data with a high accuracy. Necessary data about the workpiece are only the weight of the workpiece, and the entire shape of the workpiece is not essential. In this embodiment, therefore, the weight of the workpiece, instead of three-dimensional data on the workpiece, is transmitted from the client device 20 to the server 10. This can provide a security, and can suppress a communication data amount.

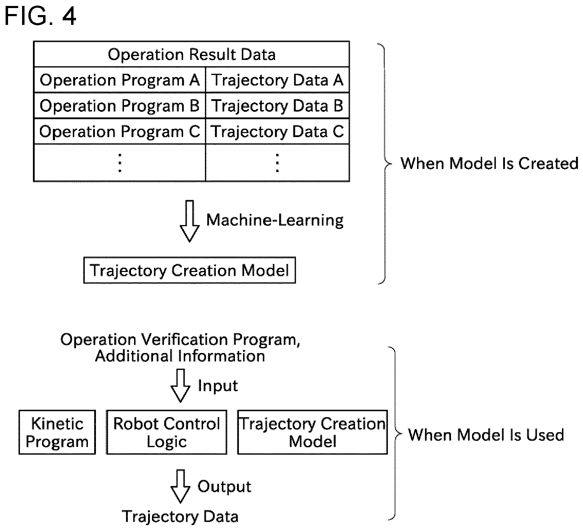

The trajectory creation model is a model that is built through machine-learning of operation result data, as shown in FIG. 4. The operation result data are data in which an operation program is associated with actual trajectory data obtained as a result of an input of the operation program. The actual trajectory data are, for example, detection values of the sensors 42c at every predetermined time. Use of the operation result data makes it possible to learn a correlation of the operation program with the trajectory data, in other words, a tendency of how the robot operates in response to the operation program. Accordingly, using the trajectory creation model in addition to the robot control logic when calculating trajectory data makes it possible to create the trajectory data with an even higher accuracy.

The operation result data may be associated with a robot model type. In such a case, the operation result data including the robot model type are machine-learned to create a trajectory creation model. In using the model, information including the robot model type is inputted to the trajectory creation model.

Here, it may be acceptable that the operation result data are not modeled but used for calculation of trajectory data. When the actuator suffers from a heavy load, such as when the arms 42a are moved at a high speed or when the arms 42a are suddenly accelerated or suddenly decelerated, there may be a delay in operations of the arms 42a. A characteristic of the operation program when a delay occurs in the operations of the arms 42a can be estimated through analysis of the operation result data. For example, if the operation verification program has this characteristic, the server 10 calculates trajectory data with a delay of the actuator taken into account.

The kinetic program is a program for allowing trajectory data to be calculated in consideration of an influence of a physical phenomenon such as a vibration and a collision. Additionally using the kinetic program when calculating trajectory data makes it possible to create the trajectory data with a further higher accuracy. Since the kinetic program is a known program, a detailed description thereof will be omitted. Computation based on the kinetic program is not indispensable, and thus may be omitted.

The server 10 then determines whether or not the server 10 has been instructed to optimize the operation verification program. The optimization of the operation verification program means modifying the operation verification program so as to improve the evaluation of the operation of the robot 42. The worker instructs whether or not the optimization is necessary, at an appropriate timing, such as at a time of transmission of the operation verification program, or after creation of the trajectory data.

If the server 10 determines that there is no instruction for optimization, the server 10 transmits trajectory data to the client device 20 (S104). The worker, who is a robot user, causes the trajectory data received from the server 10 to be reproduced on the teaching software of the client device 20, and thereby can grasp how the robot 42 operates at each time. This makes it possible to decide with a high accuracy whether there is an interference between the robot 42 and any object therearound. Moreover, the worker, who is the robot user, can grasp from the trajectory data a cycle time of the work of the robot 42.

If the server 10 determines that there is an instruction for optimization, the server 10 decides whether or not the trajectory data satisfies an evaluation criterion (S105). An evaluation of the trajectory data is made based on, for example, the cycle time, energy consumption, and the like. As mentioned above, the cycle time can be grasped based on the trajectory data. The shorter the cycle time is, the higher the evaluation of the trajectory data is. When, for example, there is wasted motion of the arms 42a and there is a detour in arriving at the point B from the point A, the energy consumption is high, which results in a low evaluation. An item other than the cycle time and the energy consumption may be provided as the evaluation criterion.

Upon deciding that the trajectory data satisfies the evaluation criterion, the server 10 notifies the client device 20 that optimization is not necessary, and transmits the trajectory data to the client device (S 106).

Upon deciding that the trajectory data does not satisfy the evaluation criterion, the server 10 creates a modification program (S107). The modification program refers to an operation program obtained by modifying the operation verification program. To be specific, the modification includes changing the position of the teaching point, the speed of the arms 42a, the acceleration of the arms 42a, or other parameters. Preferably, the modification included in the modification program raises the evaluation of the trajectory data. It therefore is preferable that the modification is made so as to shorten the cycle time or reduce the energy consumption, for example.

After creating the modification program, the server 10 creates trajectory data for the modification program (S108). Then, the server 10 evaluates the trajectory data for the modification program, and determines whether or not it satisfies the evaluation criterion (S109). Upon deciding that it does not satisfy the evaluation criterion, the server 10 performs the processes of step S 107 to step S109 again, to update the modification program. Then, upon deciding that the trajectory data for the modification program satisfies the evaluation criterion, the server 10 transmits the modification program and the trajectory data to the client device 20 (S 110).

Although in this embodiment the modification program is kept updated until the evaluation criterion is satisfied, an upper limit may be put on the number of times of updating. For example, if the evaluation criterion is not satisfied even though the modification program is updated up to the upper limit, the server 10 transmits to the client device 20 the highest-evaluated one of the modification programs that the server 10 has created in the past. Setting of the evaluation criterion is not indispensable, and can be omitted. In such a case as well, it is required that the upper limit be put on the number of times of updating, and the highest-evaluated one of the modification programs created in the past be transmitted to the client device 20.

The worker, who is the robot user, stores in the client device 20 the modification program received from the server 10, and reproduces the trajectory data on the teaching software of the client device 20, and thus grasps how the robot 42 operates at each time. In this manner, whether there is an interference between the robot 42 and any object therearound can be determined with a high accuracy. Especially, an operation program useful for the robot user can be obtained and used, because the operation verification program is optimized.

The trajectory creation service covers the creation of the trajectory data at the most, and the decision of whether or not there is an interference is covered by the client device 20 of the robot user. This eliminates the need to provide the server 10 with three-dimensional data on the workshop, the three-dimensional data on the workpiece, and the like, which results in an increased security and a suppressed communication data amount.

As thus far described above, the server 10 of this embodiment includes the storage device 13, the communication device 11, and the processing unit 12. The storage device 13 stores operation result data including plural sets of data, each set of which includes an operation program for the industrial robot 42 and operations of the robot 42 responding to the operation program from one time to another. The communication device 11 receives an operation verification program by communicating with the client device 20 via a wide area network, the operation verification program being the operation program created in the client device 20. The processing unit 12 creates trajectory data based on the operation verification program received by the communication device 11 and the operation result data stored in the storage device 13, the trajectory data indicating operations of the robot 42 for the operation verification program from one time to another.

Since the operation result data can be used, the trajectory data can be created with a high accuracy.

In the server 10 of this embodiment, the communication device 11 receives the additional information, which is information not included in the operation program and is information necessary to create the trajectory data. The processing unit 12 creates the trajectory data based on the additional information.

This can address a situation where the trajectory data cannot be created with the operation program alone.

In the server 10 of this embodiment, the additional information includes at least any of a model type of the robot 42, a kind of the work tool 42b used by the robot 42, or the weight of a workpiece that is a working object of the robot 42.

Use of the additional data makes it possible to create the trajectory data with a higher accuracy.

In the server 10 of this embodiment, data that the communication device 11 receives from the client device 20 are a part of data stored in the client device 20, the part excluding three-dimensional data and including text data.

Accordingly, the size of data received from the external device can be reduced to a low level. Moreover, this function can be achieved without the need to transmit highly confidential three-dimensional data to the outside of the external device.

In the server 10 of this embodiment, the processing unit 12 uses the trajectory creation model, which is built through machine-learning of the operation result data, to create the trajectory data for the operation verification program.

This makes it possible to effectively make use of a tendency of the correlation between the operation program and the trajectory data indicated by the operation result data. Accordingly, the trajectory data can be created with a higher accuracy.

In the server 10 of this embodiment, the communication device 11 transmits to the client device 20 the trajectory data created by the processing unit 12.

This allows the external device to make use of the trajectory data.

In the server 10 of this embodiment, the processing unit 12 evaluates the operation verification program based on the trajectory data for the operation verification program, and creates the modification program obtained by modifying the operation verification program such that the modification program has a higher evaluation than that of the operation verification program. The communication device 11 transmits to the client device 20 the modification program created by the processing unit 12.

This makes it possible to propose a more appropriate operation program.

In the server 10 of this embodiment, the processing unit 12 repeats a process of creating the modification program and evaluating the trajectory data, and has the communication device 11 transmit to the client device 20 the modification program for which the trajectory data satisfies the evaluation criterion.

Accordingly, the modification program having a high evaluation can be created with a simple logic.

In the server 10 of this embodiment, the communication device 11 communicates via the Internet with the client devices 20 disposed in plural facilities, respectively.

Accordingly, the server 10 can be shared by the plural facilities.

While a preferred embodiment of the present invention has been described above, the configurations described above may be modified, for example, as follows.

The flowchart illustrated in the embodiment described above is just an example, and it may be acceptable that a part of the process is omitted, contents of a part of the process are changed, or a new process is added. For example, the process related to optimization may be omitted. It may also be possible that: step S103, in which a determination about the instruction for optimization is made, is omitted; and the modification program is created for every operation verification program. In such a configuration, in step S 110, for a worker who does not wish to have the modification program, trajectory data for the operation verification program may be additionally transmitted. Although in this embodiment one modification program that satisfies the evaluation condition is transmitted to the client device 20, plural modification programs may be created and transmitted to the client device 20.

The server 10 according to the embodiment described above is installed in the data center, but in a case where, for example, the robot manufacturer provides the robot service provider system 1, the server 10 may be installed in the robot manufacturer.

The functionality of the elements disclosed herein may be implemented using circuitry or processing circuitry which includes general purpose processors, special purpose processors, integrated circuits, ASICs (Application Specific Integrated Circuits), conventional circuitry and/or combinations thereof which are configured or programmed to perform the disclosed functionality. Processors are considered as processing circuitry or circuitry as they include transistors and other circuitry therein. In the disclosure, the circuitry, units, or means are hardware that carry out the recited functionality, or are hardware programmed to perform the recited functionality. The hardware may be any hardware disclosed herein or otherwise may be other known hardware which is programmed or configured to carry out the recited functionality. When the hardware is a processor which may be considered as a type of circuitry, the circuitry, means, or units are a combination of hardware and software, the software being used to configure the hardware and/or processor.

## Claims

1. A robot data processing server comprising:
a storage device that stores operation result data including plural sets of data, each set of which includes an operation program for an industrial robot and operations of the robot responding to the operation program from one time to another;
a communication device configured to receive an operation verification program by communicating with an external device via a wide area network, the operation verification program being the operation program created in the external device; and
a processing unit configured to create trajectory data based on the operation verification program received by the communication device and the operation result data stored in the storage device, the trajectory data indicating operations of the robot for the operation verification program from one time to another.

2. The robot data processing server according to claim 1, wherein
the communication device receives additional information, the additional information being information not included in the operation verification program and being information necessary to create the trajectory data, and
the processing unit creates the trajectory data based on the additional information.

3. The robot data processing server according to claim 2, wherein
the additional information includes at least any of a model type of the robot, a kind of a work tool used by the robot, or the weight of a workpiece that is a working object of the robot.

4. The robot data processing server according to any one of claims 1 to 3, wherein
data that the communication device receives from the external device are a part of data stored in the external device, the part excluding three-dimensional data and including text data.

5. The robot data processing server according to any one of claims 1 to 4, wherein
the processing unit uses a trajectory creation model to create the trajectory data for the operation verification program, the trajectory creation model being built through machine-learning of the operation result data.

6. The robot data processing server according to any one of claims 1 to 5, wherein
the communication device transmits to the external device the trajectory data created by the processing unit.

7. The robot data processing server according to any one of claims 1 to 6, wherein
the processing unit evaluates the operation verification program based on the trajectory data for the operation verification program, and creates a modification program obtained by modifying the operation verification program such that the modification program has a higher evaluation than that of the operation verification program, and
the communication device transmits to the external device the modification program created by the processing unit.

8. The robot data processing server according to claim 7, wherein
the processing unit repeats a process of creating the modification program and evaluating the trajectory data, and has the communication device transmit to the external device the modification program for which the trajectory data satisfies an evaluation criterion.

9. The robot data processing server according to any one of claims 1 to 8, wherein
the communication device communicates via the Internet with the external devices disposed in plural facilities, respectively.

10. A method for calculating trajectory data, the method comprising:
receiving an operation verification program by communicating with an external device via a wide area network, the operation verification program being an operation program created in the external device, and
creating trajectory data based on the received operation verification program and operation result data including plural sets of data, each set of which includes an operation program for an industrial robot and operations of the robot responding to the operation program from one time to another, the trajectory data indicating operations of the robot for the operation verification program from one time to another.
